# EUROPEAN PATENT APPLICATION

(11) **EP 4 843 654 A1**
(43) Date of publication of application: **25.11.2026**
(21) Application number: 24918448.2
(22) Date of filing: 26.12.2024
(51) Int. Cl.: B01D 53/04, B01D 53/14, C01B 32/50

(54) **FACILITY FOR SEPARATING AND RECOVERING CARBON DIOXIDE IN ATMOSPHERE**

(30) Priority: 19.01.2024 JP 2024006611
(71) Applicant: Kawasaki Jukogyo Kabushiki Kaisha, Kobe-shi, Hyogo 650-8670 (JP)
(72) Inventor: MANABE, Satoshi, Hyogo 650-8670 (JP); NARIAI, Toshifumi, Hyogo 650-8670 (JP); OKUMURA, Takeshi, Hyogo 650-8670 (JP); NISHIBE, Shohei, Hyogo 650-8670 (JP)
(74) Representative: Leinweber & Zimmermann
(86) International application number: PCT/JP2024/046281
(87) International publication number: WO 2025/154538

(57) **Abstract**

An atmospheric carbon dioxide separation and capture facility according to one aspect of the present disclosure includes: an adsorption tower that performs an adsorption treatment in which carbon dioxide contained in atmospheric air is adsorbed onto particulate adsorbent accommodated in the adsorption tower by bringing the atmospheric air into contact with the adsorbent; a regeneration tower that is located above the adsorption tower and performs a regeneration treatment in which the carbon dioxide is desorbed from the particulate adsorbent accommodated in the regeneration tower by bringing steam into contact with the adsorbent; and a transporter that transports the adsorbent, discharged from the adsorption tower, to the regeneration tower. The adsorption tower receives the adsorbent subjected to the regeneration treatment in the regeneration tower, and performs the adsorption treatment using the received adsorbent. The regeneration tower receives the adsorbent used for the adsorption treatment in the adsorption tower, and performs the regeneration treatment with respect to the received adsorbent.

## Description

### Technical Field

The present disclosure relates to an atmospheric carbon dioxide separation and capture facility that separates and captures carbon dioxide from atmospheric air.

### Background Art

PTL 1 below discloses a system that adsorbs carbon dioxide in air by using adsorbent. In PTL 1, FIG. 11a discloses a system that regenerates the adsorbent having adsorbed carbon dioxide by bringing the adsorbent into contact with steam, lifts the regenerated adsorbent in a vertical direction, and returns the adsorbent to a container in which an adsorption treatment is performed.

### Citation List

### Patent Literature

PTL 1: Japanese Laid-Open Patent Application Publication No. 2022-20723

### Summary of Invention

### Technical Problem

When the regeneration treatment using steam is performed, a large amount of moisture adheres to the adsorbent. However, unlike a system that separates and captures carbon dioxide from "exhaust gas," a system that separates and captures carbon dioxide from "atmospheric air" does not perform a drying treatment for drying the adsorbent. This is because, during the adsorption treatment, a large amount of atmospheric air is blown into the adsorbent, and this blowing of atmospheric air dries the adsorbent.

Since the drying treatment is not performed also in the system described in PTL 1, a large amount of moisture adheres to the adsorbent to be transported to the container in which the adsorption treatment is performed. When the adsorbent to which such a large amount of moisture adheres is transported by a transporter, troubles may occur in the transporter and peripheral equipment thereof.

An object of the present disclosure is to provide an atmospheric carbon dioxide separation and capture facility capable of suppressing troubles in, for example, a transporter that transports adsorbent.

### Solution to Problem

An atmospheric carbon dioxide separation and capture facility according to one aspect of the present disclosure includes: an adsorption tower that performs an adsorption treatment in which carbon dioxide contained in atmospheric air is adsorbed onto particulate adsorbent accommodated in the adsorption tower by bringing the atmospheric air into contact with the adsorbent; a regeneration tower that is located above the adsorption tower and performs a regeneration treatment in which the carbon dioxide is desorbed from the particulate adsorbent accommodated in the regeneration tower by bringing steam into contact with the adsorbent; and a transporter that transports the adsorbent, discharged from the adsorption tower, to the regeneration tower. The adsorption tower receives the adsorbent subjected to the regeneration treatment in the regeneration tower, and performs the adsorption treatment using the received adsorbent. The regeneration tower receives the adsorbent used for the adsorption treatment in the adsorption tower, and performs the regeneration treatment with respect to the received adsorbent.

### Advantageous Effects of Invention

According to this configuration, troubles in, for example, a transporter that transports adsorbent can be suppressed.

### Brief Description of Drawings

FIG. 1 is a schematic diagram of an atmospheric carbon dioxide separation and capture facility according to Embodiment 1, as viewed from the front.
FIG. 2 is a schematic diagram of the atmospheric carbon dioxide separation and capture facility according to Embodiment 1, as viewed from the rear.
FIG. 3 is a schematic diagram of the atmospheric carbon dioxide separation and capture facility according to Embodiment 2, as viewed from the front.
FIG. 4 is a schematic diagram of the atmospheric carbon dioxide separation and capture facility according to Embodiment 3, as viewed from the front.
FIG. 5 is a schematic diagram of the atmospheric carbon dioxide separation and capture facility according to Embodiment 4, as viewed from the front.

### Description of Embodiments

### Embodiment 1

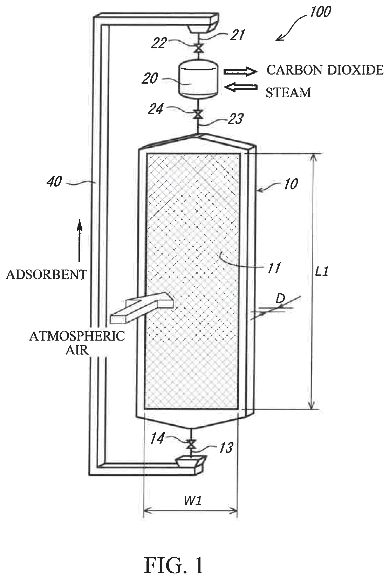

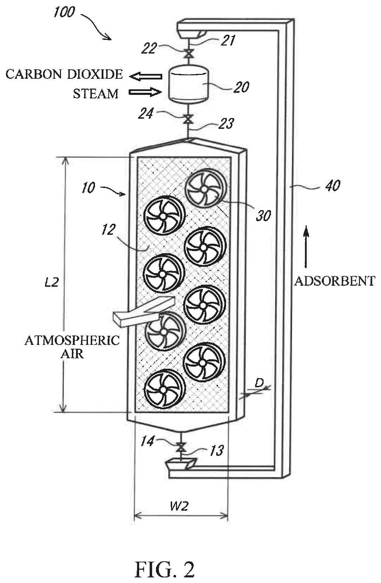

Hereinafter, embodiments will be described. First, a carbon dioxide separation and capture facility (hereinafter referred to as a "separation and capture facility") 100 according to Embodiment 1 will be described. FIG. 1 is a schematic diagram of the separation and capture facility 100 according to Embodiment 1, as viewed from the front. Moreover, FIG. 2 is a schematic diagram of the separation and capture facility 100 according to Embodiment 1, as viewed from the rear.

The separation and capture facility 100 includes an adsorption tower 10, a regeneration tower 20, suction structures 30, and a transporter 40. The following will describe these components in order.

### Adsorption Tower

The adsorption tower 10 is a chamber in which an adsorption treatment for causing adsorbent to adsorb carbon dioxide contained in atmospheric air is performed. The adsorbent used in the adsorption treatment is the adsorbent that has been subjected to the regeneration treatment in the below-described regeneration tower 20. The adsorption tower 10 receives the adsorbent that has been subjected to the regeneration treatment in the regeneration tower 20, and performs an adsorption treatment using the received adsorbent. The atmospheric air comes into contact with the adsorbent by passing through the inside of the adsorption tower 10 accommodating the adsorbent. Thus, carbon dioxide in the atmospheric air is adsorbed onto the adsorbent and captured. The adsorbent of the present embodiment is particulate adsorbent, and adsorbent in which a porous carrier is impregnated with an amine is used. However, the adsorbent is not limited to this.

The adsorption tower 10 of the present embodiment has a plate shape perpendicular to a horizontal direction. The adsorption tower 10 includes: an inflow surface 11 that is one of main surfaces as shown in FIG. 1; and an outflow surface 12 that is the other main surface as shown in FIG. 2. The inflow surface 11 and the outflow surface 12 are, for example, mesh members and allow the atmospheric air to pass therethrough. As shown in FIG. 1, the atmospheric air flows from the outside of the adsorption tower 10 through the inflow surface 11 to the inside of the adsorption tower 10. Moreover, as shown in FIG. 2, the atmospheric air that has flown to the inside of the adsorption tower 10 passes through gaps of the adsorbent and flows to the outside of the adsorption tower 10 through the outflow surface 12. In the present embodiment, the inflow surface 11 and the outflow surface 12 are parallel to each other.

Herein, a distance from the inflow surface 11 to the outflow surface 12 is referred to as a "travel distance D." Dimensions of the inflow surface 11 and the outflow surface 12 in a longitudinal direction are referred to as a "vertical dimension L1" and a "vertical dimension L2," respectively. Dimensions of the inflow surface 11 and the outflow surface 12 in a direction perpendicular to the longitudinal direction are referred to as a "width dimension W1" and a "width dimension W2," respectively. In this case, the travel distance D is shorter than each of the vertical dimension L1 and the width dimension W1 of the inflow surface 11 and also shorter than each of the vertical dimension L2 and the width dimension W2 of the outflow surface 12.

Moreover, the vertical dimension L1 of the inflow surface 11 is larger than the width dimension W1 of the inflow surface 11, and the vertical dimension L2 of the outflow surface 12 is larger than the width dimension W2 of the outflow surface 12. In the present embodiment, the inflow surface 11 and the outflow surface 12 extend in an upper-lower direction. Therefore, the vertical dimension L1 of the inflow surface 11 and the vertical dimension L2 of the outflow surface 12 coincide with the height of the inflow surface 11 and the height of the outflow surface 12, respectively. Moreover, the width dimension W1 of the inflow surface 11 and the width dimension W2 of the outflow surface 12 coincide with the horizontal width of the inflow surface 11 and the horizontal width of the outflow surface 12, respectively.

However, when the inflow surface 11 and the outflow surface 12 are inclined relative to a vertical direction, or when each of the inflow surface 11 and the outflow surface 12 has a horizontally elongated shape, the vertical dimension L1 of the inflow surface 11 and the vertical dimension L2 of the outflow surface 12 do not necessarily coincide with the height of the inflow surface 11 and the height of the outflow surface 12, respectively, and the width dimension W1 of the inflow surface 11 and the width dimension W2 of the outflow surface 12 do not necessarily coincide with the horizontal width of the inflow surface 11 and the horizontal width of the outflow surface 12, respectively.

The vertical dimension L1 of the inflow surface 11 may be the same as or different from the vertical dimension L2 of the outflow surface 12. Similarly, the width dimension W1 of the inflow surface 11 may be the same as or different from the width dimension W2 of the outflow surface 12. Moreover, each of the inflow surface 11 and the outflow surface 12 in the present embodiment has a rectangular shape. However, each of the inflow surface 11 and the outflow surface 12 may have a shape other than the rectangular shape. Furthermore, the inflow surface 11 and the outflow surface 12 may have different shapes from each other.

Moreover, the adsorbent in the adsorption tower 10 is sequentially exchanged. A lower end portion of the adsorption tower 10 is connected to a discharge pipe 13. The adsorbent in the adsorption tower 10 is discharged through the discharge pipe 13. A discharge valve 14 is located in the discharge pipe 13. The adsorbent in the adsorption tower 10 can be discharged by opening the discharge valve 14, and the discharge of the adsorbent in the adsorption tower 10 can be stopped by closing the discharge valve 14.

### Regeneration Tower

The regeneration tower 20 is a chamber in which a regeneration treatment for desorbing carbon dioxide from the adsorbent is performed. The adsorbent to be subjected to the regeneration treatment is the adsorbent that has been used for the adsorption treatment in the adsorption tower 10. The regeneration tower 20 receives the adsorbent that has been used for the adsorption treatment in the adsorption tower 10, and performs the regeneration treatment by bringing steam into contact with the received adsorbent. The regeneration tower 20 of the present embodiment is a sealable container. In the regeneration treatment of the present embodiment, since pressure inside the regeneration tower 20 is set to negative pressure, the regeneration tower 20 is formed so as to be able to withstand the negative pressure.

An upper end portion of the regeneration tower 20 is connected to an inlet portion 21, and the adsorbent is supplied to the regeneration tower 20 through the inlet portion 21. An inlet valve 22 is located in the inlet portion 21. Moreover, a lower end portion of the regeneration tower 20 is connected to an outlet portion 23, and the adsorbent in the regeneration tower 20 is supplied to the adsorption tower 10 through the outlet portion 23. An outlet valve 24 is located in the outlet portion 23.

The regeneration tower 20 of the present embodiment is located above the adsorption tower 10. Therefore, when the outlet valve 24 is opened, the adsorbent in the regeneration tower 20 moves into the adsorption tower 10 by its own weight. Thus, according to the present embodiment, when the adsorbent in the regeneration tower 20 is moved into the adsorption tower 10, a transporter is unnecessary, or even if a transporter is used, a simple one is sufficient. Therefore, even when a large amount of moisture adheres to the adsorbent due to the regeneration treatment, a transporter that transports the adsorbent does not exist or is a simple one, and thus, troubles in the transporter and peripheral equipment thereof due to the moisture adhering to the adsorbent are unlikely to occur.

The volume of the regeneration tower 20 is smaller than that of the adsorption tower 10. For example, the volume of the regeneration tower 20 is equal to or less than half the volume of the adsorption tower 10. Moreover, the volume of the regeneration tower 20 may be about 1/6 or more and about 1/4 or less of the volume of the adsorption tower 10.

### Suction Structures

The suction structures 30 are devices that suck the atmospheric air from the inside of the adsorption tower 10. As shown in FIG. 2, the suction structures 30 are located outside the adsorption tower 10 and close to the outflow surface 12. The suction structures 30 of the present embodiment are, for example, fans. However, the suction structures 30 are not limited to these. For example, the suction structure 30 may be a pipe that is connected to a negative-pressure tank or a negative-pressure chimney. Instead of the suction structures 30, the separation and capture facility 100 may include an air blower, such as a fan, which supplies the atmospheric air to the inflow surface 11 of the adsorption tower 10.

The suction structures 30 suck the atmospheric air from the inside of the adsorption tower 10 through the outflow surface 12 of the adsorption tower 10, and therefore, the atmospheric air flows to the inside of the adsorption tower 10 from the outside of the adsorption tower 10 through the inflow surface 11. As above, in the present embodiment, instead of using the air blower that supplies the atmospheric air toward the inflow surface 11 of the adsorption tower 10, the suction structures 30 are used to cause the atmospheric air to flow to the inside of the adsorption tower 10.

Therefore, according to the present embodiment, the atmospheric air flowing into the adsorption tower 10 can be prevented from increasing in temperature due to passing through the air blower. The adsorbent adsorbs carbon dioxide more readily at low temperatures. In the present embodiment, since the atmospheric air that is relatively low in temperature flows into the adsorption tower 10, the temperature rise of the adsorbent due to the atmospheric air is suppressed, and the adsorption treatment can be efficiently performed.

### Transporter

The transporter 40 is a device that transports the adsorbent, which has been discharged from the adsorption tower 10, to the regeneration tower 20. The transporter 40 receives, through the discharge pipe 13, the adsorbent discharged from the adsorption tower 10, and lifts the received adsorbent. The lifted adsorbent is supplied to the regeneration tower 20 through the inlet portion 21. Since the adsorbent comes into contact with a large amount of atmospheric air in the adsorption treatment, the adsorbent used in the adsorption treatment is dry. Therefore, troubles in the transporter 40 and peripheral equipment thereof due to the moisture adhering to the adsorbent can be avoided. For example, a bucket conveyor, a pneumatic conveyor, or the like can be used as the transporter 40.

### Operations of Separation and Capture Facility

Next, operations of the separation and capture facility 100 will be described. The separation and capture facility 100 performs the adsorption treatment in the adsorption tower 10. Specifically, in a state in which the adsorption tower 10 is filled with the adsorbent, the suction structures 30 are driven. Thus, the atmospheric air flows to the inside of the adsorption tower 10 through the inflow surface 11 by the suction structures 30. As this atmospheric air passes through the inside of the adsorption tower 10, carbon dioxide in the atmospheric air is adsorbed onto the adsorbent.

Moreover, simultaneously with the adsorption treatment, the regeneration treatment is performed with respect to the adsorbent that has been used in the adsorption treatment. Specifically, the adsorbent that has been used in the adsorption treatment is charged into the regeneration tower 20. Then, the regeneration tower 20 is sealed by closing the inlet valve 22 and the outlet valve 24. In this state, steam is supplied to the regeneration tower 20. Thus, carbon dioxide is desorbed from the adsorbent.

Next, when the regeneration treatment is completed, the suction structures 30 are stopped once. Then, the outlet valve 24 is opened, and the discharge valve 14 is opened. Thus, the adsorbent that has been subjected to the regeneration treatment is supplied from the regeneration tower 20 to the adsorption tower 10, and the adsorbent that has adsorbed carbon dioxide is discharged from the adsorption tower 10. In this case, instead of discharging all the adsorbent in the adsorption tower 10, the adsorbent is discharged from the adsorption tower 10 in an amount equal to the amount of adsorbent supplied to the adsorption tower 10, i.e., in an amount equal to the volume of the regeneration tower 20. For example, when the volume of the regeneration tower 20 is one-fifth of the volume of the adsorption tower 10, one-fifth of the adsorbent in the adsorption tower 10 is discharged. Thereafter, the outlet valve 24 and the discharge valve 14 are closed.

Next, simultaneously with or slightly after the discharge of the adsorbent from the adsorption tower 10, the transporter 40 is operated, and the inlet valve 22 is opened. Thus, the adsorbent discharged from the adsorption tower 10 is transported to and charged into the regeneration tower 20. After the adsorbent is charged into the regeneration tower 20, the transporter 40 is stopped, and the inlet valve 22 is closed. Thereafter, the suction structures 30 are driven to resume the adsorption treatment, and steam is supplied to the regeneration tower 20 to resume the regeneration treatment. In the separation and capture facility 100, the above operations are defined as one cycle, and this cycle is repeated.

By repeating the above cycle, the adsorbent supplied to the adsorption tower 10 moves downward and is discharged from the adsorption tower 10. To be specific, the adsorption tower 10 is configured to move the adsorbent, received through an upper portion thereof, downward, and discharge the adsorbent from a lower portion thereof. Then, each time the regeneration treatment by the regeneration tower 20 is completed, the adsorption tower 10 discharges the adsorbent in an amount corresponding to the volume of the regeneration tower 20 from the lower portion. When the volume of the regeneration tower 20 is one-fifth of the volume of the adsorption tower 10, the entire adsorbent in the adsorption tower 10 is exchanged by repeating the above cycle five times. As above, in the present embodiment, the supply and discharge of the adsorbent to and from the adsorption tower 10 are performed intermittently. To be specific, the adsorption treatment and the regeneration treatment can be performed intermittently.

### Embodiment 2

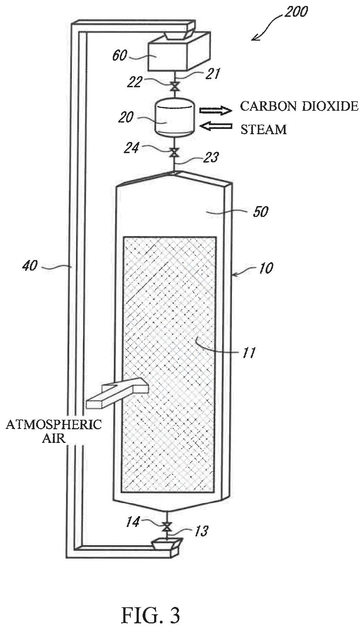

Next, a separation and capture facility 200 according to Embodiment 2 will be described. FIG. 3 is a schematic diagram of the separation and capture facility 200 according to Embodiment 2, as viewed from the front. The separation and capture facility 200 according to Embodiment 2 is different from the separation and capture facility 100 according to Embodiment 1 in that the separation and capture facility 200 includes an adsorption standby tower 50 and a regeneration standby tower 60. Except for this, the separation and capture facility 200 according to Embodiment 2 has basically the same configuration as the separation and capture facility 100 according to Embodiment 1. Therefore, the following will describe the adsorption standby tower 50 and the regeneration standby tower 60 in detail.

### Adsorption Standby Tower

The adsorption standby tower 50 is a chamber that accommodates the adsorbent before the adsorption treatment. The adsorption standby tower 50 is located below the regeneration tower 20 and above the adsorption tower 10. The adsorbent subjected to the regeneration treatment in the regeneration tower 20 is temporarily accommodated in the adsorption standby tower 50 and then supplied to the adsorption tower 10. Therefore, even while the regeneration treatment is being performed in the regeneration tower 20, the supply and discharge of the adsorbent to and from the adsorption tower 10 can be continued until the adsorbent in the adsorption standby tower 50 is exhausted.

In addition, the volume of the adsorption standby tower 50 of the present embodiment is equal to or larger than the volume of the regeneration tower 20. To be specific, the adsorption standby tower 50 can accommodate the adsorbent in an amount corresponding to one or more regeneration treatments. Accordingly, by adjusting the amount of adsorbent discharged from the adsorption tower 10 such that "a time required to discharge the adsorbent in an amount corresponding to one regeneration treatment from the adsorption tower 10" matches "a time required to perform the regeneration treatment once," the adsorption tower 10 can be kept filled with the adsorbent regardless of the timing at which the regeneration treatment is completed. Therefore, according to the present embodiment, the adsorption treatment can be continuously performed, and therefore, the adsorption treatment can be efficiently performed.

Although the adsorption standby tower 50 and the adsorption tower 10 are integrally formed in the present embodiment, the adsorption standby tower 50 and the adsorption tower 10 may be separately formed. When the adsorption standby tower 50 and the adsorption tower 10 are integrally formed, a region through which the atmospheric air passes is the adsorption tower 10, and a region through which the atmospheric air does not pass is the adsorption standby tower 50. For example, when the suction structures 30 include fans 31, a region located above the fan 31 located at an uppermost position may be defined as the adsorption standby tower 50.

### Regeneration Standby Tower

The regeneration standby tower 60 is a chamber that accommodates the adsorbent before the regeneration treatment. The regeneration standby tower 60 of the present embodiment is located above the regeneration tower 20 and accommodates the adsorbent transported by the transporter 40. Therefore, the adsorbent transported by the transporter 40 is accommodated in the regeneration standby tower 60, and then, supplied to the regeneration tower 20. In the present embodiment, the regeneration standby tower 60 and the regeneration tower 20 are separately formed. Moreover, in the present embodiment, the volume of the regeneration standby tower 60 is equal to the volume of the regeneration tower 20. However, the volume of the regeneration standby tower 60 may be different from the volume of the regeneration tower 20.

Since the separation and capture facility 200 according to the present embodiment includes the regeneration standby tower 60, the adsorbent transported by the transporter 40 while the regeneration treatment is being performed in the regeneration tower 20 can be stored in the regeneration standby tower 60. By storing the adsorbent before the regeneration treatment in the regeneration standby tower 60 as above, the adsorbent to be subjected to the next regeneration treatment can be promptly supplied to the regeneration tower 20 after the current regeneration treatment is completed. Therefore, according to the present embodiment, the regeneration treatment can be efficiently performed.

### Embodiment 3

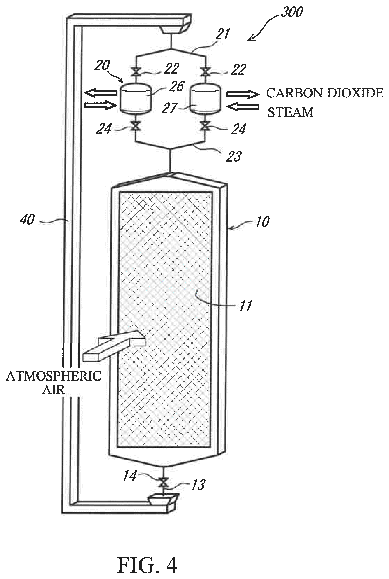

Next, a separation and capture facility 300 according to Embodiment 3 will be described. FIG. 4 is a schematic diagram of the separation and capture facility 300 according to Embodiment 3, as viewed from the front. The separation and capture facility 300 according to Embodiment 3 is different from the separation and capture facility 100 according to Embodiment 1 in that the regeneration tower 20 includes a first regeneration tower 26 and a second regeneration tower 27. To be specific, in Embodiment 3, the regeneration tower 20 is divided. Except for this, the separation and capture facility 300 according to Embodiment 3 has basically the same configuration as the separation and capture facility 100 according to Embodiment 1.

In the first regeneration tower 26 and the second regeneration tower 27, the regeneration treatments are performed independently of each other. The first regeneration tower 26 and the second regeneration tower 27 are connected in parallel, and the adsorbent subjected to the regeneration treatment in the first regeneration tower 26 and the adsorbent subjected to the regeneration treatment in the second regeneration tower 27 are supplied to the same adsorption tower 10. Therefore, by alternately performing the regeneration treatment in the first regeneration tower 26 and the regeneration treatment in the second regeneration tower 27, the time interval for supplying the adsorbent from the regeneration tower 20 to the adsorption tower 10 can be shortened, and therefore, the adsorption treatment can be efficiently performed. Although the regeneration tower 20 of the present embodiment includes the two regeneration towers 26 and 27, the regeneration tower 20 may include three or more regeneration towers.

### Embodiment 4

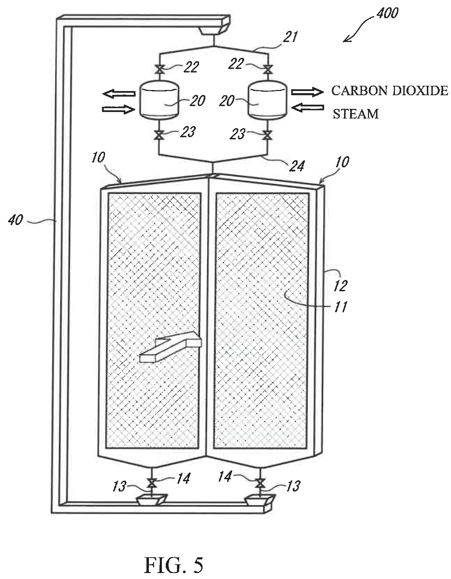

Next, a separation and capture facility 400 according to Embodiment 4 will be described. FIG. 5 is a schematic diagram of the separation and capture facility 400 according to Embodiment 4, as viewed from the front. The separation and capture facility 400 according to Embodiment 4 includes: two adsorption towers 10 located adjacent to each other in a width direction; and two regeneration towers 20 connected in parallel. To be specific, the separation and capture facility 400 according to Embodiment 4 has a structure similar to a structure obtained by combining two separation and capture facilities 100 according to Embodiment 1. However, each of the regeneration towers 20 of the separation and capture facility 400 according to the present embodiment can supply the adsorbent to either of the two adsorption towers 10.

According to the present embodiment, as with Embodiment 3, the time interval for supplying the adsorbent from the regeneration tower 20 to the adsorption tower 10 can be shortened, and the adsorption treatment can be efficiently performed. Although the separation and capture facility 400 according to the present embodiment includes the two adsorption towers 10 and the two regeneration towers 20, the separation and capture facility 400 may include three or more adsorption towers 10 and three or more regeneration towers 20.

The foregoing has described Embodiments 1 to 4. However, the configuration of the separation and capture facility disclosed in the present specification is not limited to the above-described configurations. For example, the separation and capture facilities 100, 200, 300, and 400 according to the above embodiments may be combined with each other.

### Conclusion

A first aspect disclosed in the present specification is an atmospheric carbon dioxide separation and capture facility including: an adsorption tower that performs an adsorption treatment in which carbon dioxide contained in atmospheric air is adsorbed onto particulate adsorbent accommodated in the adsorption tower by bringing the atmospheric air into contact with the adsorbent; a regeneration tower that is located above the adsorption tower and performs a regeneration treatment in which the carbon dioxide is desorbed from the particulate adsorbent accommodated in the regeneration tower by bringing steam into contact with the adsorbent; and a transporter that transports the adsorbent, discharged from the adsorption tower, to the regeneration tower, wherein: the adsorption tower receives the adsorbent subjected to the regeneration treatment in the regeneration tower, and performs the adsorption treatment using the received adsorbent; and the regeneration tower receives the adsorbent used for the adsorption treatment in the adsorption tower, and performs the regeneration treatment with respect to the received adsorbent.

According to this configuration, since the transporter transports the dry adsorbent, troubles in the transporter and the like can be suppressed.

A second aspect disclosed in the present specification is the atmospheric carbon dioxide separation and capture facility according to the first aspect, wherein a volume of the regeneration tower is equal to or smaller than half a volume of the adsorption tower.

According to this configuration, the cycles of the adsorption treatment and the regeneration treatment can be performed in a well-balanced manner.

A third aspect disclosed in the present specification is the atmospheric carbon dioxide separation and capture facility according to the second aspect, wherein: the adsorption tower is configured to move the adsorbent, received from an upper portion of the adsorption tower, downward and discharge the adsorbent from a lower portion of the adsorption tower; and each time the regeneration treatment by the regeneration tower is completed, the adsorption tower discharges the adsorbent in an amount corresponding to the volume of the regeneration tower from the lower portion.

According to this configuration, the adsorption treatment and the regeneration treatment can be performed intermittently.

A fourth aspect disclosed in the present specification is the atmospheric carbon dioxide separation and capture facility according to any one of the first to third aspects, including an adsorption standby tower that is located above the adsorption tower, has a volume equal to or larger than a volume of the regeneration tower, and accommodates the adsorbent before the adsorption treatment.

According to this configuration, the adsorption treatment can be continuously performed, and the adsorption treatment can be efficiently performed.

A fifth aspect disclosed in the present specification is the atmospheric carbon dioxide separation and capture facility according to any one of the first to fourth aspects, including a regeneration standby tower that is located above the regeneration tower and accommodates the adsorbent, which has been transported by the transporter, before the regeneration treatment.

According to this configuration, since the adsorbent can be promptly supplied to the regeneration tower, the regeneration treatment can be efficiently performed.

A sixth aspect disclosed in the present specification is the atmospheric carbon dioxide separation and capture facility according to any one of the first to fifth aspects, wherein the regeneration tower includes a first regeneration tower and a second regeneration tower that are connected in parallel, perform the regeneration treatments independently of each other, and supply the regenerated adsorbent to the same adsorption tower.

According to this configuration, since the time interval for supplying the adsorbent from the regeneration tower to the adsorption tower can be shortened, the adsorption treatment can be efficiently performed.

A seventh aspect disclosed in the present specification is the atmospheric carbon dioxide separation and capture facility according to any one of the first to sixth aspects, wherein the adsorption tower includes an inflow surface through which the atmospheric air flows from an outside of the adsorption tower to an inside of the adsorption tower and an outflow surface through which the atmospheric air flows from the inside of the adsorption tower to the outside of the adsorption tower.

According to this configuration, since a large amount of atmospheric air can be taken into the adsorption tower through the inflow surface, the adsorption treatment can be efficiently performed.

An eighth aspect disclosed in the present specification is the atmospheric carbon dioxide separation and capture facility according to the seventh aspect, including suction structures that are located outside the adsorption tower and suck the atmospheric air from the inside of the adsorption tower through the outflow surface to cause the atmospheric air to flow from the outside of the adsorption tower through the inflow surface to the inside of the adsorption tower.

According to this configuration, since the temperature of the atmospheric air flowing into the adsorption tower can be suppressed, the increase in the temperature of the adsorbent can be suppressed, and the adsorption treatment can be efficiently performed.

A ninth aspect disclosed in the present specification is the atmospheric carbon dioxide separation and capture facility according to the seventh or eighth aspect, wherein a distance from the inflow surface to the outflow surface is shorter than each of a vertical dimension and a width dimension of the inflow surface and also shorter than each of a vertical dimension and a width dimension of the outflow surface.

According to this configuration, a movement distance of the atmospheric air in the adsorption tower is shortened while securing the volume of the adsorption tower at a certain level or more. Thus, the pressure loss of the atmospheric air can be reduced.

## Claims

1. An atmospheric carbon dioxide separation and capture facility comprising:
an adsorption tower that performs an adsorption treatment in which carbon dioxide contained in atmospheric air is adsorbed onto particulate adsorbent accommodated in the adsorption tower by bringing the atmospheric air into contact with the adsorbent;
a regeneration tower that is located above the adsorption tower and performs a regeneration treatment in which the carbon dioxide is desorbed from the particulate adsorbent accommodated in the regeneration tower by bringing steam into contact with the adsorbent; and
a transporter that transports the adsorbent, discharged from the adsorption tower, to the regeneration tower, wherein:
the adsorption tower receives the adsorbent subjected to the regeneration treatment in the regeneration tower, and performs the adsorption treatment using the received adsorbent; and
the regeneration tower receives the adsorbent used for the adsorption treatment in the adsorption tower, and performs the regeneration treatment with respect to the received adsorbent.

2. The atmospheric carbon dioxide separation and capture facility according to claim 1, wherein a volume of the regeneration tower is equal to or smaller than half a volume of the adsorption tower.

3. The atmospheric carbon dioxide separation and capture facility according to claim 2, wherein:
the adsorption tower is configured to move the adsorbent, received from an upper portion of the adsorption tower, downward and discharge the adsorbent from a lower portion of the adsorption tower; and
each time the regeneration treatment by the regeneration tower is completed, the adsorption tower discharges the adsorbent in an amount corresponding to the volume of the regeneration tower from the lower portion.

4. The atmospheric carbon dioxide separation and capture facility according to claim 1, comprising an adsorption standby tower that is located above the adsorption tower, has a volume equal to or larger than a volume of the regeneration tower, and accommodates the adsorbent before the adsorption treatment.

5. The atmospheric carbon dioxide separation and capture facility according to claim 1, comprising a regeneration standby tower that is located above the regeneration tower and accommodates the adsorbent, which has been transported by the transporter, before the regeneration treatment.

6. The atmospheric carbon dioxide separation and capture facility according to claim 1, wherein the regeneration tower includes a first regeneration tower and a second regeneration tower that are connected in parallel, perform the regeneration treatments independently of each other, and supply the regenerated adsorbent to the same adsorption tower.

7. The atmospheric carbon dioxide separation and capture facility according to claim 1, wherein
the adsorption tower includes
an inflow surface through which the atmospheric air flows from an outside of the adsorption tower to an inside of the adsorption tower and
an outflow surface through which the atmospheric air flows from the inside of the adsorption tower to the outside of the adsorption tower.

8. The atmospheric carbon dioxide separation and capture facility according to claim 7, comprising suction structures that are located outside the adsorption tower and suck the atmospheric air from the inside of the adsorption tower through the outflow surface to cause the atmospheric air to flow from the outside of the adsorption tower through the inflow surface to the inside of the adsorption tower.

9. The atmospheric carbon dioxide separation and capture facility according to claim 7, wherein a distance from the inflow surface to the outflow surface is shorter than each of a vertical dimension and a width dimension of the inflow surface and also shorter than each of a vertical dimension and a width dimension of the outflow surface.
